# EUROPEAN PATENT SPECIFICATION

(11) **EP 0 541 800 B1**
(45) Date of publication and mention of the grant of the patent: **27.11.1996**
(21) Application number: 91910166.7
(22) Date of filing: 31.05.1991
(51) Int. Cl.: G03B 21/00, G03B 3/00, G02B 7/09, H04N 9/28, G02B 7/32

(54) **PROJECTION TYPE DISPLAY DEVICE**
PROJEKTIONSWIEDERGABEVORRICHTUNG
SYSTEME D'AFFICHAGE DE TYPE A PROJECTION

(43) Date of publication of application: 19.05.1993
(73) Proprietor: SEIKO EPSON CORPORATION, Shinjuku-ku Tokyo 163-08 (JP)
(72) Inventor: BABA, Hiroyuki, Suwa-shi Nagano 392 (JP)
(74) Representative: Hoffmann, Eckart, Dipl.-Ing.
(86) International application number: PCT/JP91/00740
(87) International publication number: WO 92/22007

(56) References cited:
- JP-A- 1 204 010
- JP-A-57 104 918
- JP-A-59 097 123
- JP-A-60 247 631
- JP-A-61 067 012
- JP-A-61 240 108
- JP-A-61 275 615
- JP-B-53 006 046
- JP-U-57 039 032
- JP-U-60 128 314
- JP-Y-49 022 189
- PATENT ABSTRACTS OF JAPAN vol. 11, no. 112 (P-565)9 April 1987 & JP-A-61 261 710
- PATENT ABSTRACTS OF JAPAN vol. 13, no. 527 (P-965)24 November 1989 & JP-A-12 14 828
- PATENT ABSTRACTS OF JAPAN vol. 14, no. 293 (P-1066)25 June 1990 & JP-A-20 90 135

## Description

The present invention relates to a projection type display system and, more particularly, to a projection type display system for an enlarged projection on a screen through a projection lens by generating an image through a CRT or a liquid crystal panel in accordance with video data. Especially, the present invention relates to a small-sized highly portable projection type display system using a liquid crystal panel.

In the small-sized highly portable projection type display system (e.g., the projection type display system using a liquid crystal panel as optical modulation means), the projection lens has its focal length adjusted either manually by mechanical means or automatically by an electric motor operated by a switch, because the distance between the projection type display system and a screen changes each time the place of the display system changes.

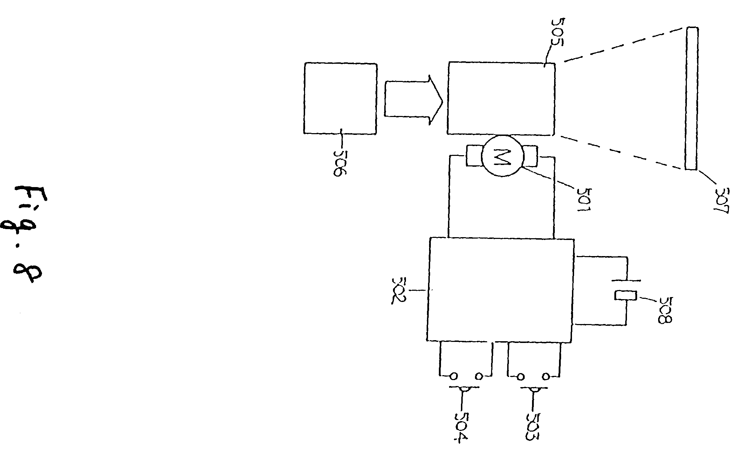

Here will be specifically described the background art with reference to Fig. 8.

Fig. 8 is a diagram showing the structure of a focusing mechanism for adjusting the focal point of a projection lens by an electric motor operated by a switch.

If an operation switch 504 is depressed, pulses having a width proportional to the time period for the time depression are generated from a motor drive signal generator 502. As a result, a projection lens drive motor 501 drives a projection lens 505 for the time period of the pulse width so that the projection lens 505 is driven toward a screen 507 to change the focal length.

If an operation switch 503 is depressed, the projection lens 505 is driven by the operations like the aforementioned ones away from the screen 507 to change the focal length.

By the operations thus far described, the operation switches 503 and 504 are operated to move the projection lens 505 to adjust the distance between the projection lens 505 and the screen 507 to a value equal to the focal length of the projection lens 505. As a result, the light having been modulated by an optical modulation block 506 in accordance with video signals is clearly projected on the screen 507 in an enlarged scale by the projection lens 505. Reference numeral 508 designates a power supply for the motor drive signal generator 502.

Since the focal adjustment is accomplished by depressing the operation switches 503 and 504, according to this background art, the depressions are continued to the vicinity of the optimum focal adjustment while observing the image focused on the screen 507. After this, the projection lens forward operation switch 504 and the backward operation switch 503 are also depressed several times up to the optimum focal point while the image focused on the screen 507 being observed. This troubles the operations because the depressions of the operations switches 503 and 504 are required several times till the end of setting the optical focal point.

In case a user of poor visibility adjusts the focal point, the background art finds it difficult to achieve the optimum focal point because he has to accomplish the adjustment because he has to observe the image focused on the screen 507.

The document JP-A-2-90135 discloses an overhead projector comprising a liquid crystal device which may be arranged on an original surface as a means for generating an image, a projection lens system having a projection lens for projecting said image on a screen, a range finding unit for finding the distance between said projection lens and said screen by means of light from a laser diode, and automatic adjustment means for adjusting the focal point of said projection lens system at a desired position in response to said range finding unit, such as to focus said image on said screen. Another overhead projector is disclosed in the document JP-A-1-214828. In this prior art a range finding unit employs infrared light for generating a control signal used for automatic adjustment of the focal point of a projection lens system. The document JP-A-61-261710 discloses a projection type display device using a CRT as means for generating an image in response to video data. Means for automatically focussing a projection lens system include a range finder employing infrared light.

The present invention has been conceived in view of the problems thus far described and its object is to facilitate the focal adjustment of a projection type display system thereby to improve the precision of setting the optimum focal point.

This object is achieved with a display system as claimed in claim 1. Preferred embodiments are subject-matter of dependent claims.

In order to achieve the above-specified object, according to the present invention, the projection type display system comprises a pattern display unit for displaying a fixed pattern at the end of the focal adjustment when the automatic focusing means stops, the user can easily confirm the instant of ending the operation of the automatic focusing means to improve the operability of the focal adjustment.

If, moreover, the aforementioned pattern display unit is replaced by one for displaying a first fixed pattern during the focal adjustment while the automatic focal adjustment means is in operation and a second fixed pattern at the end of the focal adjustment while the automatic focal adjustment means is not in operation, the operability of the focal adjustment is further improved because the user is enabled to confirm the operation of the automatic focal adjustment means easily by making different the fixed patterns displayed during and at the end of the operation of the automatic focal adjustment means.

### BRIEF DESCRIPTION OF DRAWINGS

Fig. 1 is a block diagram showing the basic structure of a projection type display system used in a projection type display system according to the present invention;
Fig. 2 is a diagram schematically showing the automatic focal adjustment;
Fig. 3 is a diagram showing an infrared ray reception unit;
Fig. 4 is a block diagram showing the structure of a projection type display system according to a first embodiment for exemplifying the projection type display system according to the present invention;
Fig. 5 is a diagram showing a focal adjustment fixed pattern to be applied to the projection type display system according to the first embodiment;
Fig. 6 is a block diagram showing the structure of a projection type display system according to a second embodiment for exemplifying the projection type display system according to the present invention;
Figs. 7A and 7B are diagrams showing two kinds of focal adjustment fixed patterns to be applied to the projection type display system according to the second embodiment; and
Fig. 8 is a block diagram showing the projection type display system according to the background art of the present invention.

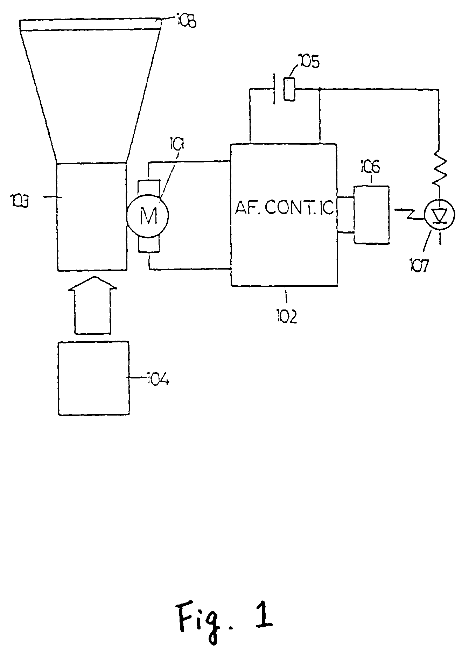

The present invention will be described in the following in connection with the embodiments thereof with reference to Figs. 1 to 7. Incidentally, same components in the description are designated with identical reference signs, and any overlapped description will be omitted.

First of all, the basic configuration of the projection type display system will be described with reference to Figs. 1 to 3. The automatic focal adjustment mechanism is constructed to adjust the focal length of a projection lens by finding the distance between the projection lens and the screen with an infrared ray. Specifically, the distance between a projection lens 103 and a screen 108 is found by emitting the infrared ray from an infrared ray emission unit 107 and by receiving the reflected infrared ray by an infrared ray reception unit 106. In accordance with the found distance, moreover, a drive signal is issued from an AF.CONT.IC (i.e., auto-focus control IC) 102 to drive the focal adjustment motor 101. In response to this drive signal, the projection lens 103 is moved forward or backward to effect such an automatic adjustment that the distance between the projection lens and the screen is equalized to the focal length of the projection lens. As a result, the light modulated in an optical modulation block 104 in accordance with video data is projected in an enlarged scale by the projection lens 103 so that it is clearly focused on the screen 108. Incidentally, the AF.CONT. IC 102 is connected with a power supply 105 so that it is supplied with a drive voltage.

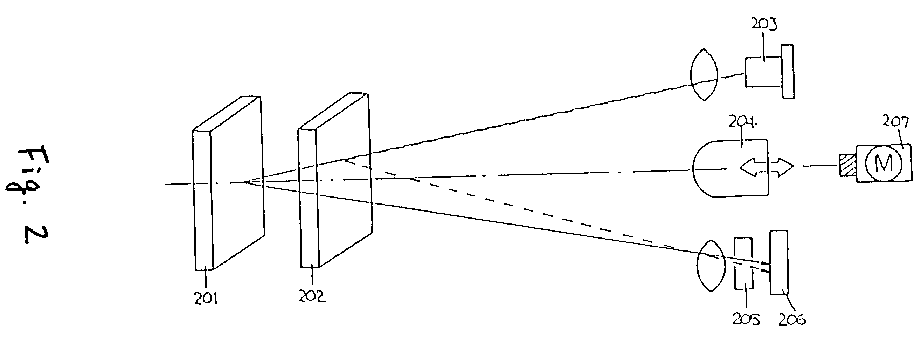

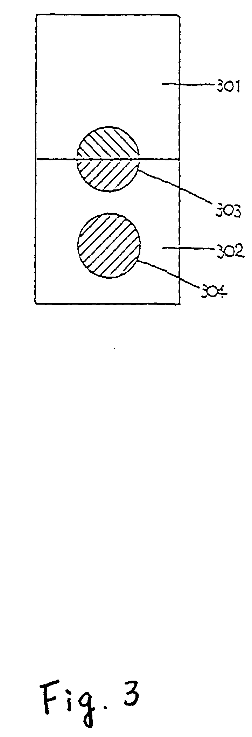

Next, the operation principles of the automatic adjustment mechanism employed in this system will be described with reference to Figs. 2 and 3. An infrared ray emitted from an infrared emission unit 203 is reflected by a screen 201 or a screen 202. Here, the screen 201 is located where the focal point is adjusted to the optimum, whereas the screen 202 is located in a position out of focus. The infrared rays thus reflected by those screens 201 and 202 are so deflected by a parallel prism 205 that they are received by an infrared ray reception unit 206. A drive signal for a focal adjustment motor 207 is generated in accordance with the spot positions of the infrared rays received on the infrared ray reception unit 206.

This infrared ray reception unit is divided, as shown in Fig. 3, into two areas, i.e., an area A 301 and an area B 302. If the focal length is automatically adjusted to the optimum position, the infrared ray spots extend evenly over the area A 301 and the area B 302 and are located at a spot position 303. If out of focus, on the contrary, the infrared ray spot position is offset to the area A 301 or the area B 302, as indicated at a spot position 304. As a matter of fact, the reception unit itself is composed of a photo-electric conversion element or the like so that it generates an electric signal in proportion to the level of the infrared ray received. As a result, the AF.CONT.IC 102 can generate a drive signal for the focus adjustment motor 207 on the basis of the infrared ray received by the infrared ray reception unit. For example, the focus adjustment motor drive signal is generated to move the projection lens 204 forward, if the ray is received at the area A 301, and to move the projection lens 204 backward if the ray is received at the area B 302. Thus, the infrared ray spot extends evenly, as indicated at the spot position 303, over the area A 301 and the area B 302 so that the focus is automatically adjusted by moving the projection lens 204 forward or backward till the optimum focal point is achieved by balancing the focal adjustment motor drive signal for moving the projection lens 204 forward and the focal adjustment motor drive signal for moving the projection lens 204 backward.

Thus, the projection lens 204 is moved back and forth by the focus adjustment motor 207 so that its focal length is automatically adjusted to optimize the relation between the screen and the projection lens like the case of the screen 201 having the optimum focal point.

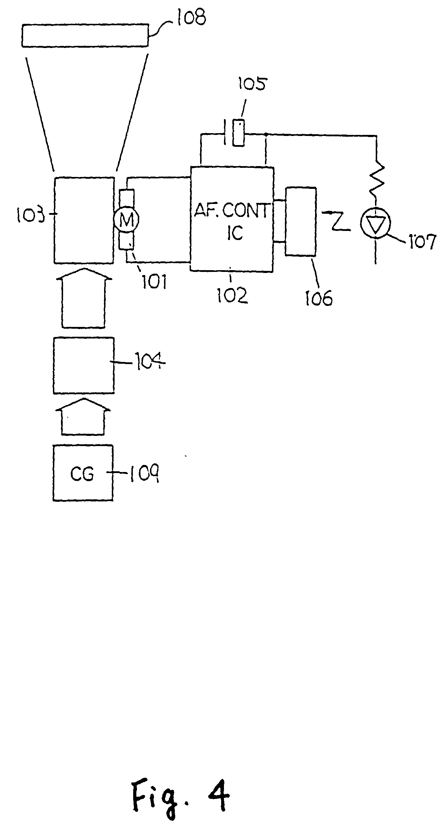

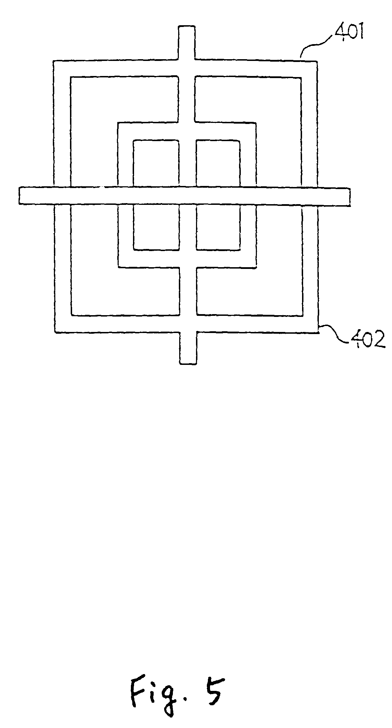

Next, a projection type display system according to a first embodiment of the present invention will be described with reference to Figs. 4 and 5. This embodiment is equipped, in addition to the basic structure explained above, with a character generator (e.g., a pattern display unit) capable of displaying one kind of fixed pattern so that the user can visually confirm the end of the operation of the auto-focus adjustment mechanism. The infrared ray is emitted from the infrared ray emission unit 107 and is received by the infrared ray reception unit 106. Thus, the distance between the projection lens 103 and the screen 108 is measured, and the drive signal for the focus adjustment motor 101 is generated from the AF. CONT.IC 102 in accordance with the measured distance. The AF.CONT.IC 102 is connected with the power supply 105 so that it is supplied with the drive voltage. By the drive signal generated from the AF.CONT.IC 102, the focus adjustment motor 101 is driven to move the projection lens 103 forward or backward. As a result of this forward or backward movement of the projection lens 103, the auto-focusing is so effected that the distance between the projection lens 103 and the screen 108 is equalized to the focal length of the projection lens 103. The principle of this automatic adjustment has been described hereinbefore. Therefore, the light having been modulated in the optical modulation block 104 in accordance with the video data is projected in an enlarged scale by the projection lens 103 and is focused on the screen 108. Moreover, a character generator (i.e., CG) 109 generates one kind of fixed pattern (as shown in Fig. 5), which is superimposed on the video data. and displayed on the screen 108.

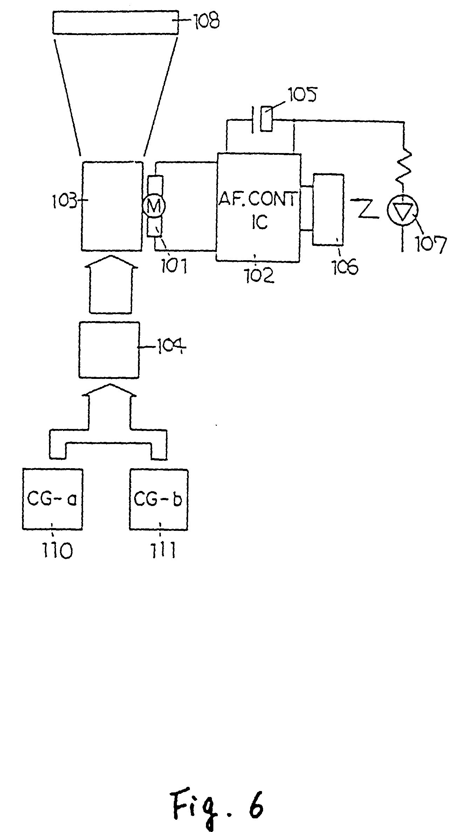

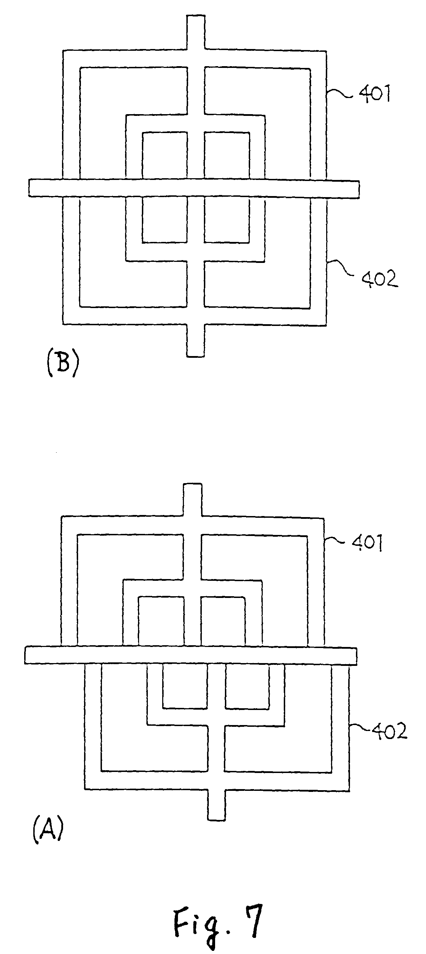

Next, a projection type display system according to a second embodiment of the present invention will be described with reference to Figs. 6 and 7. The present embodiment is equipped, different from the structure of the first embodiment, with a character generator (e.g., a pattern display unit) capable of displaying two kinds of fixed patterns so that the user can visually confirm the in-operation state and the end state of the auto-focusing mechanism.

The principle of the automatic focus adjustment is the same as in the first embodiment. Reference characters CG-a 110 and CG-b 111 designate character generators, of which the former CG-a 110 generates a fixed pattern indicating that the auto-focusing mechanism is in operation whereas the latter CG-b 111 generates a fixed pattern indicating that the auto-focusing mechanism has ended its operation. The fixed pattern data generated from the individual character generators are superimposed on the video data in the optical modulation block 104 and are displayed on the screen 108. The switching of those character generators CG-a 110 and CG-b 111 is accomplished in response to the signals which are generated from the AF.CONT.IC 102 for the different operations of the automatic adjustment mechanism.

Fig. 7A is a fixed pattern which is issued from the CG-a 110 to indicate that the auto-focusing mechanism is in operation, and Fig. 7B is a fixed pattern which is issued from the CG-b 111 to indicate that the auto-focusing mechanism has ended its operation. In case of the present embodiment, a pattern composed of offset upper and lower components is displayed on the screen 108, as shown in Fig. 7A, while the auto-focusing mechanism is in operation (because of being out of focus). At the end of the operation of the auto-focusing mechanism, on the other hand, a pattern having a complete shape is displayed on the screen 108, as shown in Fig. 7B.

In case of the first embodiment, the user is enabled to easily know the focal state of the image on the screen by displaying the pattern indicating the end of the operation of the auto-focusing mechanism.

In case of the second embodiment, by displaying two kinds of different fixed patterns for indicating that the auto-focusing mechanism is in operation and has ended its operation, respectively, the user is enabled to know the operational state of the auto-focusing mechanism easily from not only the focused state of the image on the screen but also the kind of the fixed pattern displayed.

By adopting the structure of the present invention, therefore, the operability of the focal adjustment can be drastically improved.

## Claims

1. A projection type display system comprising:
means (104) for generating an image in accordance with display data,
a projection lens system having a projection lens (103) for projecting said image on a screen (108),
a range finding unit (106, 107) for finding the distance between said projection lens and said screen with invisible light, and
automatic adjustment means (101, 102) for adjusting the focal point of said projection lens system at a desired position in response to said range finding unit, such as to focus said image on said screen;
**characterized by**
a pattern display unit (109; 110, 111) arranged to display, when said automatic adjustment means (101, 102) has ended its focal adjustment, a fixed pattern on said screen such that it is superimposed over said display data.

2. The display system according to Claim 1, wherein said pattern display unit (110, 111) is adpated to display a first fixed pattern while focal adjustment is being carried out by said automatic adjustment means and a second fixed pattern when the focal adjustment has been completed.

3. The display system according to Claim 1 or 2,
wherein said range finding unit includes a light emitting element (107) for irradiating said screen (108) with said invisible light, and a light reception element (106) having at least two divided light receiving areas (301, 302) for receiving the reflected light from said screen to output an electric signal corresponding to the light receiving position of said reflected light, and
wherein said automatic adjustment means (101, 102) includes distance changing means (101) for changing the distance from said screen (108) to said projection lens (103), and control means (102) responsive to the electric signal coming from said light reception element for sending such a control signal to said distance changing means that said reflected light irradiates a desired position in said light receiving areas.

4. The display system according to Claim 1, wherein said image generating means (104) includes a liquid crystal panel.

5. The display system according to Claim 1, wherein said image generating means includes a CRT.

6. The display system according to Claim 1, wherein said invisible light is an infrared ray.

## Patentansprüche

1. Projektions-Anzeigesystem umfassend:
eine Einrichtung (104) zur Erzeugung eines Bildes nach Maßgabe von Anzeigedaten,
ein Projektionslinsensystem mit einer Projektionslinse (103) zum Projizieren des Bildes auf einen Schirm (108),
eine Entfernungsmeßeinheit (106, 107) zur Ermittlung des Abstands zwischen der Projektionslinse und dem Schirm mittels sichtbaren Lichts, und
eine automatische Einstelleinrichtung (101, 102) zur Einstellung des Brennpunkts des Projektionslinsensystems in eine gewünschte Position abhängig von der Entfernungsmeßeinheit derart, daß das Bild auf dem Schirm fokussiert wird,
gekennzeichnet durch
eine Muster-Anzeigeeinheit (109; 110, 111), die so ausgebildet ist, daß sie, wenn die automatische Einstelleinrichtung (101, 102) ihre Fokuseinstellung beendet hat, ein festgelegtes Musters auf dem Schirm anzeigt, so daß dieses den Anzeigedaten überlagert ist.

2. Anzeigesystem nach Anspruch 1, bei dem die Muster-Anzeigeeinheit (110, 111) in der Lage ist, ein erstes festgelegtes Muster anzuzeigen, während die Fokuseinstellung von der automatischen Einstelleinrichtung ausgeführt wird, und ein zweites festgelegtes Muster anzuzeigen, wenn die Fokuseinstellung beendet ist.

3. Anzeigesystem nach Anspruch 1 oder 2,
bei dem die Entfernungsmeßeinheit ein Lichtsendeelement (107) zur Bestrahlung des Schirms (108) mit dem sichtbaren Licht und ein Lichtempfangselement (106) enthält, welches wenigstens zwei unterteilte Lichtempfangsbereiche (301, 302) aufweist zum Empfang des reflektierten Lichts von dem Schirm zur Ausgabe eines elektrischen Signals entsprechend der Lichtempfangsposition des reflektierten Lichts, und
bei dem die automatische Einstelleinrichtung (101, 102) eine Entfernungsänderungseinrichtung (101) zur Änderung der Entfernung von dem Schirm (108) zu der Projektionslinse (103) und eine Steuereinrichtung (102) aufweist, die auf das von dem Lichtempfangselement kommende elektrische Signal anspricht, um an die Entfernungsänderungseinrichtung solch ein Steuersignal zu senden, daß das reflektierte Licht eine gewünschte Position in den Lichtempfangsbereichen bestrahlt.

4. Anzeigesystem nach Anspruch 1, bei dem die Bilderzeugungseinrichtung (104) eine Flüssigkristalltafel enthält.

5. Anzeigesystem nach Anspruch 1, bei dem die Bilderzeugungseinrichtung eine Kathodenstrahlröhre enthält.

6. Anzeigesystem nach Anspruch 1, bei dem das sichtbare Licht ein Infrarotstrahl ist.

## Revendications

1. Système d'affichage du type à projection comprenant :
des moyens (104) pour produire une image en fonction de données d'affichage,
un système de lentilles de projection ayant une lentille (103) de projection pour projeter l'image sur un écran (108),
une unité (106, 107) de télémétrie pour trouver la distance entre la lentille de projection et l'écran avec une lumière invisible, et
des moyens (101, 102) de mise au point automatique pour ajuster le foyer du système de lentilles de projection à une position souhaitée en réponse à l'unité de télémétrie, de façon à focaliser l'image sur l'écran ;
caractérisé par
une unité (109; 110, 111) d'affichage de motif conçue pour afficher, lorsque les moyens (101, 102) de mise au point automatique ont fini d'effectuer leur ajustement focal, un motif fixe sur l'écran, de façon qu'il soit superposé aux données d'affichage.

2. Système d'affichage selon la revendication 1, dans lequel l'unité (110, 111) d'affichage de motif est conçue pour afficher un premier motif fixe pendant que l'ajustement focal est effectué par le système de mise au point automatique et un second motif fixe lorsque l'ajustement focal est achevé.

3. Système d'affichage selon la revendication 1 ou 2, dans lequel l'unité de télémétrie compote un élément (107) photoémetteur pour exposer l'écran (108) à la lumière invisible, et un élément (106) photorécepteur ayant au moins deux zones (301,302) photoréceptrices divisées destinées à recevoir la lumière réfléchie par l'écran afin de fournir en sortie un signal électrique correspondant à la position de réception de la lumière réfléchie, et
dans lequel les moyens (101, 102) de mise au point automatique comprennent des moyens (101) de modification de distance pour modifier les distances de l'écran (108) à la lentille (103) de projection, et des moyens (102) de commande sensibles au signal électrique provenant de l'élément photorécepteur pour envoyer aux moyens de modification de distance un signal de commande tel que la lumière réfléchie éclaire une partie souhaitée des zones de réception de lumière.

4. Système d'affichage selon la revendication 1, dans lequel les moyens (104) générateurs d'images comprennent un écran à cristaux liquides.

5. Système d'affichage selon la revendication 1, dans lequel les moyens générateurs d'images comprennent un tube à rayons cathodiques.

6. Système d'affichage selon la revendication 1, dans lequel la lumière invisible est un rayon infrarouge.
